# FASCICULE DE BREVET EUROPEEN

(11) **EP 4 469 323 B1**
(45) Date de publication et mention de la délivrance du brevet: **28.01.2026**
(21) Numéro de dépôt: 22840806.8
(22) Date de dépôt: 14.12.2022
(51) Int. Cl.: B60W 30/14, B60W 30/18, B60W 50/00

(54) **PROCÉDÉ ET SYSTÈME POUR GÉRER LA VITESSE D'UN VÉHICULE AUTOMOBILE DANS UN VIRAGE**
VERFAHREN UND SYSTEM ZUR VERWALTUNG DER GESCHWINDIGKEIT EINES SICH RUND UM EINE KURVE BEWEGENDEN KRAFTFAHRZEUGS
METHOD AND SYSTEM FOR MANAGING THE SPEED OF A MOTOR VEHICLE GOING AROUND A BEND

(30) Priorité: 28.01.2022 FR 2200729
(43) Date de publication de la demande: 04.12.2024
(73) Titulaire: Stellantis Auto SAS, 78300 Poissy (FR)
(72) Inventeur: ET-THAQFY, Yassine, Casablanca, 20620 (MA); EL HANBALI, Hamza, Casablanca, 20580 (MA)
(74) Mandataire: ESIP
(86) Numéro de dépôt international: PCT/FR2022/052347
(87) Numéro de publication internationale: WO 2023/144469

(56) Documents cités:
- EP-A2- 1 693 242
- US-A1- 2009 037 062
- US-A1- 2015 134 222
- US-B2- 9 399 450

## Description

### Domaine technique de l'invention

La présente invention concerne le domaine des systèmes informatiques qui sont embarqués à bord des véhicules automobiles pour fournir des fonctionnalités d'aide à la conduite et améliorer le confort des véhicules et la sécurité de la conduite. L'invention porte en particulier sur un procédé de gestion de la vitesse d'un véhicule automobile dans un virage. L'invention concerne également un système mettant en œuvre un tel procédé. L'invention s'applique aux véhicules automobiles tels que les véhicules terrestres à moteur, notamment les voitures, les poids-lourds, les véhicules utilitaires, etc.

### État de la technique antérieure

On sait que certains véhicules actuels sont équipés d'appareillages informatiques et électroniques qui fournissent des fonctionnalités d'aide à la conduite, notamment pour assurer de manière autonome le guidage des véhicules dans certaines situations de conduite particulières. Parmi ces situations, certains appareillages d'aide à la conduite sont en mesure de gérer de manière autonome la vitesse des véhicules dans les virages. Pour ce faire, ces appareillages se basent sur des informations cartographiques qui sont fournies en temps réel aux appareillages de navigation des véhicules au moyen de dispositifs de communication par signaux radiofréquences embarqués, informations cartographiques qui, pour identifier le profil d'un virage, prennent notamment la forme de suites de couples de valeurs numériques (une valeur de distance et une valeur de courbure) énumérés en rang croissant selon la distance depuis l'entrée du virage. Cependant, ces informations cartographiques sont parfois imprécises, et ces imprécisions engendrent une perception erronée de la courbure des virages par les appareillages d'aide à la conduite qui conduit à la réalisation d'accélérations et de déclarations inopportunes qui nuisent aussi bien au confort des véhicules qu'à la sécurité de la conduite. Les documents US 2015/134222 A1 et EP 1 693 242 A2, par exemple, divulguent des systèmes permettant d'adapter la vitesse d'un véhicule dans les virages.

### Résumé de l'invention

L'invention vise à pallier ces inconvénients. L'invention a en effet pour but de fournir un procédé et un système qui contribuent pour permettre de minimiser le risque qu'un appareillage d'aide à la conduite d'un véhicule automobile qui gère de manière autonome la vitesse du véhicule dans les virages produise des accélérations et des décélérations inopportunes. Par ce biais, l'invention vise à améliorer aussi bien le confort des véhicules automobiles que la sécurité de la conduite.

Ces buts sont atteints, selon un premier objet de l'invention, au moyen d'un procédé de gestion de la vitesse d'un véhicule automobile dans un virage, le procédé comprenant les étapes de :
i) acquérir des données caractérisant des informations cartographiques consistant en une première suite composée de couples formés chacun d'une première valeur correspondant à la distance depuis l'entrée du virage, d'une deuxième valeur correspondant à la courbure du virage à cette distance et énumérés en rang croissant selon la distance depuis l'entrée du virage ;
ii) réaliser un filtrage de la première suite de manière itérative afin d'obtenir une deuxième suite, ledit filtrage consistant à analyser à chaque itération un à un chacun des couples dans l'ordre croissant des rangs et à procéder au retrait d'un couple analysé si une première condition, une deuxième condition et une troisième condition sont remplies, la première condition étant remplie lorsqu'il est établi qu'il existe une variation négative entre la deuxième valeur du couple analysé et la deuxième valeur du couple précédent tandis qu'il existe une variation positive entre la deuxième valeur du couple analysé et la deuxième valeur du couple suivant ou une variation positive entre les deuxièmes valeurs de deux couples successifs de rang supérieur à celui du couple suivant, la deuxième condition étant remplie lorsqu'il est établi que la valeur absolue de la variation entre la deuxième valeur du couple analysé et la deuxième valeur du couple précédent est supérieure ou égale à une première constante préétablie et la troisième condition étant remplie lorsqu'il est établi que la première valeur du couple analysé et la première valeur du couple précédent est inférieure ou égale à une deuxième constante préétablie ; et
iii) gérer la vitesse du véhicule dans le virage en utilisant la deuxième suite.

Selon une variante, l'étape i) peut être réalisée en interagissant avec un appareillage de navigation du véhicule qui communique au moyen d'un dispositif de communication par signaux radiofréquences avec un serveur distant du véhicule afin de recevoir les informations cartographiques.

En outre, l'invention a également pour objet un système pour gérer la vitesse d'un véhicule automobile dans un virage, le système comprenant au moins une unité de traitement d'informations, comprenant au moins un processeur, et un support de stockage de données configurés pour mettre en œuvre un procédé tel que décrit ci-dessus.

De plus, l'invention a aussi pour objet un programme comprenant des instructions de code de programme pour l'exécution des étapes d'un procédé tel que décrit ci-dessus lorsque ledit programme est exécuté sur un ordinateur et/ou un processeur.

Par ailleurs, l'invention a aussi pour objet un support utilisable dans un ordinateur, sur lequel un programme tel que décrit ci-dessus est enregistré.

Enfin, l'invention a aussi pour objet un véhicule automobile comprenant un dispositif tel que décrit ci-dessus.

### Brève description des figures

D'autres caractéristiques et avantages de l'invention apparaîtront à l'examen de la description détaillée ci-après, et des dessins annexés, sur lesquels :
[Fig. 1] illustre schématiquement un dispositif selon l'invention équipant un véhicule automobile selon l'invention ;
[Fig. 2] est un organigramme illustrant les étapes d'un procédé selon l'invention ;
[Fig. 3A] illustre schématiquement des informations cartographiques acquises au cours d'une étape d'un procédé selon l'invention ;
[Fig. 3B] illustre graphiquement des informations cartographiques acquises au cours d'une étape d'un procédé selon l'invention ;
[Fig. 4A] illustre graphiquement une suite de valeurs de distance et de courbure obtenue au cours d'une étape d'un procédé selon l'invention ;
[Fig. 4B] illustre graphiquement une suite de valeurs de distance et de courbure obtenue au cours d'une étape d'un procédé selon l'invention ;
[Fig. 4C] illustre graphiquement une suite de valeurs de distance et de courbure obtenue au cours d'une étape d'un procédé selon l'invention.

### Description détaillée de l'invention

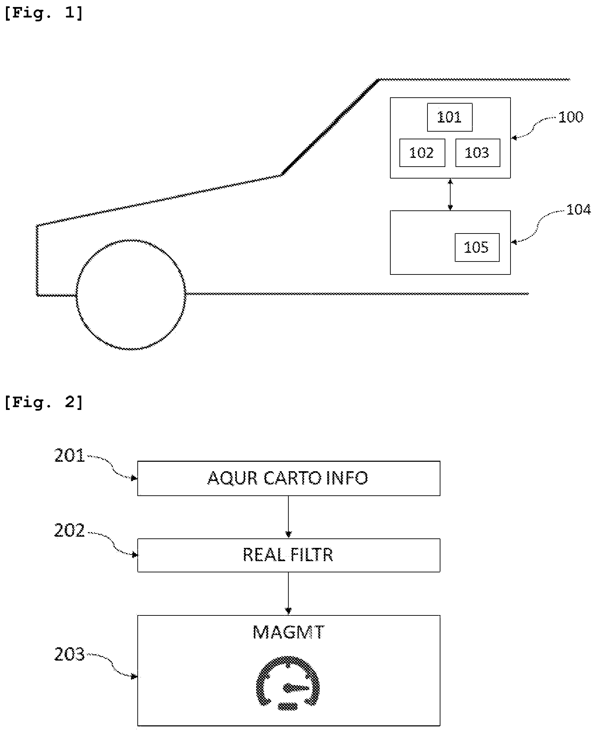

Selon l'invention, un système 100 pour gérer la vitesse d'un véhicule automobile dans un virage est illustré schématiquement sur la figure 1. Le système 100 selon l'invention est un système informatique, qui comprend une unité de traitement d'informations 101, comprenant un ou plusieurs processeurs, un support de stockage de données 102 et une interface d'entrée et sortie 103 permettant la réception et l'émission de données (et/ou signaux). Selon certains modes de réalisation, le système 100 selon l'invention est embarqué dans un véhicule automobile (e.g. voiture, autobus, poids lourd, etc.) et il est hébergé sur un ou plusieurs des calculateurs, unités de commande électroniques ou autres boitiers télématiques du véhicule. Selon d'autres modes de réalisation, le système 100 selon l'invention est hébergé sur un calculateur d'un véhicule automobile et il interagit par le biais de son interface d'entrée et sortie 103 avec un calculateur d'un appareillage d'aide à la conduite d'un véhicule automobile. Selon le mode de réalisation préféré, le système 100 selon l'invention fait partie intégrante d'un calculateur d'un appareillage d'aide à la conduite d'un véhicule automobile. Par conséquent, quel que soit le mode de réalisation de l'invention, le système 100 selon l'invention est toujours en mesure d'interagir, par le biais de son interface d'entrée et sortie 103, non seulement avec un appareillage d'aide à la conduite d'un véhicule automobile, mais également, via un tel appareillage d'aide à la conduite, avec tout autre appareillage qui, de manière conventionnelle, équipe et/ou interagit avec un appareillage d'aide à la conduite d'un véhicule automobile actuel.

Or, selon l'invention, un appareillage d'aide à la conduite comprend au moins un appareil de détection (e.g. lidar, radar, caméra, capteur à ultrasons, centrale inertielle, accéléromètre, etc.), qui permet à l'appareillage d'aide à la conduite de percevoir un environnement de conduite courant et un ou plusieurs calculateurs qui, en fonction de données brutes générées par l'appareil de détection, peuvent contrôler le fonctionnement de certains organes du véhicule qui gouvernent son déplacement (e.g. direction assistée électronique, correcteur électronique de trajectoire, ABS, régulateur de vitesse, etc.). Ainsi, en interagissant avec ou en faisant partie intégrante d'un tel appareillage d'aide à la conduite d'un véhicule automobile, le système 100 selon l'invention est notamment en mesure de gérer la vitesse du véhicule.

De plus, pour mettre en œuvre au moins une étape du procédé selon l'invention décrit ci-dessous, un appareillage d'aide à la conduite d'un véhicule automobile selon l'invention comprend également des moyens matériels (e.g. connectique) et logiciels dédiés pour interagir avec un système de navigation 104 d'un véhicule automobile, qui comprend un récepteur interagissant avec un système de positionnement par satellites et un dispositif de communication par signaux radiofréquences 105 pour communiquer avec un serveur distant en utilisant des réseaux et protocoles de communication conventionnels (e.g. 3G/4G, ITS-G5, C/LTE/5G-V2X) afin de recevoir des information cartographiques en temps réel. Par ces moyens, le système 100 selon l'invention, qui interagit avec un tel appareillage d'aide à la conduite ou en fait partie intégrante, est notamment en mesure d'acquérir des informations cartographiques.

Selon l'invention, tous les éléments décrits ci-dessus contribuent pour permettre au système 100 selon l'invention de mettre en œuvre un procédé de gestion de la vitesse d'un véhicule dans un virage, tel que décrit ci-dessous.

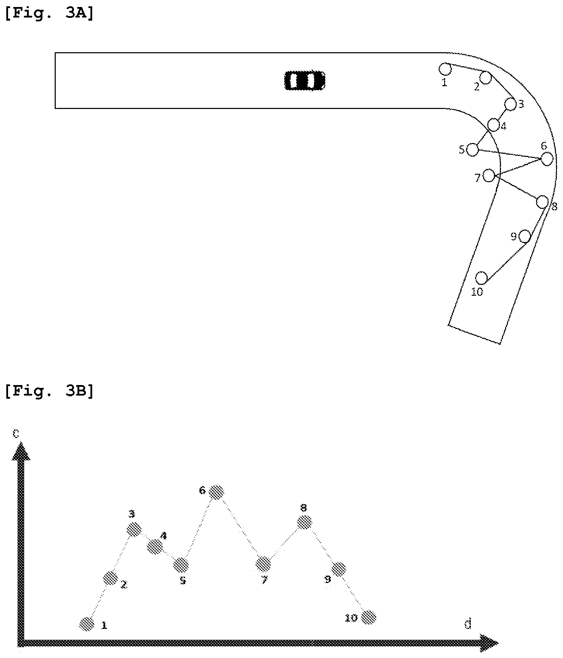

Selon une première étape 201 du procédé selon l'invention, le système 100 selon l'invention acquiert des données caractérisant des informations cartographiques consistant en une première suite composée de couples formés chacun d'une première valeur correspondant à la distance depuis l'entrée du virage, d'une deuxième valeur correspondant à la courbure du virage à cette distance et énumérés en rang croissant selon la distance depuis l'entrée du virage. Pour acquérir ces données, le système 100 selon l'invention interagit avec l'appareillage de navigation 104 du véhicule, qui reçoit ces données en temps réel au moyen de son dispositif de communication par signaux radiofréquences 105. En d'autres termes, lorsque le véhicule approche d'un virage, l'appareillage de navigation 104 du véhicule reçoit d'un serveur distant des informations cartographiques qui déterminent le profil du virage. Et, selon l'invention, ces informations cartographiques reçues par l'appareillage de navigation 104 et acquises par le système 100 selon l'invention prennent donc la forme d'une suite de couples de valeurs numériques ((d₁, c₁), ..., (dᵢ, cᵢ),... (dₙ, cₙ)), où la première valeur de chaque couple dᵢ est la distance depuis l'entrée du virage et la deuxième valeur de chaque couple cᵢ est la courbure du virage à cette distance, et dans laquelle les couples sont énumérés en rang croissant selon la distance depuis l'entrée du virage. Par exemple, lorsque le véhicule approche du virage illustré schématiquement sur la figure 3A, les informations cartographiques reçues par l'appareillage de navigation 104 et acquises par le système 100 selon l'invention sont les couples de valeurs de distance et de courbure qui correspondent aux points (i.e. endroits) 1 à 10. En d'autres termes, le système 100 selon l'invention acquiert dans cet exemple la suite de couples ((d₁, c₁), (d₂, c₂), ... , (d₁₀, c₁₀)), suite qui représentée de manière visuelle correspond au graphique de la figure 3B. Mais, comme on le voit mieux sur le graphique de la figure 3A, du fait des imprécisions des informations cartographiques, les points 1 à 10 ne forment pas une unique trajectoire curviligne qui suit le virage. En effet, les points 4, 5 et 7 s'écartent de la trajectoire formée par la majorité des points 1-3, 6, 8-10. Or, un virage correspond normalement à une succession de variations de courbure positives, qui correspondent à l'entrée du virage, suivie d'une succession de variations de courbure négatives, qui correspondent à la sortie du virage. Et c'est donc du fait de ces imprécisions que peuvent intervenir des accélérations et des décélérations inopportunes car, s'il se base sur ces informations, l'appareillage d'aide à la conduite 104 ne perçoit alors pas un seul virage mais une pluralité de virages successifs. C'est donc pour éviter cela que le système 100 selon l'invention réalise avantageusement les étapes suivantes du procédé selon l'invention décrites ci-dessous.

Selon une deuxième étape 202 du procédé selon l'invention, le système 100 selon l'invention réalise un filtrage de la première suite de manière itérative afin d'obtenir une deuxième suite, ledit filtrage consistant à analyser à chaque itération un à un chacun des couples de la première suite dans l'ordre croissant des rangs et à procéder au retrait d'un couple analysé si une première condition, une deuxième condition et une troisième condition sont remplies, la première condition étant remplie lorsqu'il est établi qu'il existe une variation négative entre la deuxième valeur du couple analysé et la deuxième valeur du couple précédent tandis qu'il existe une variation positive entre la deuxième valeur du couple analysé et la deuxième valeur du couple suivant ou une variation positive entre les deuxièmes valeurs de deux couples successifs de rang supérieur à celui du couple suivant, la deuxième condition étant remplie lorsqu'il est établi que la valeur absolue de la variation entre la deuxième valeur du couple analysé et la deuxième valeur du couple précédent est supérieure ou égale à une première constante préétablie, par exemple 0, et la troisième condition étant remplie lorsqu'il est établi que la première valeur du couple analysé et la première valeur du couple précédent est inférieure ou égale à une deuxième constante préétablie, par exemple 2 mètres.

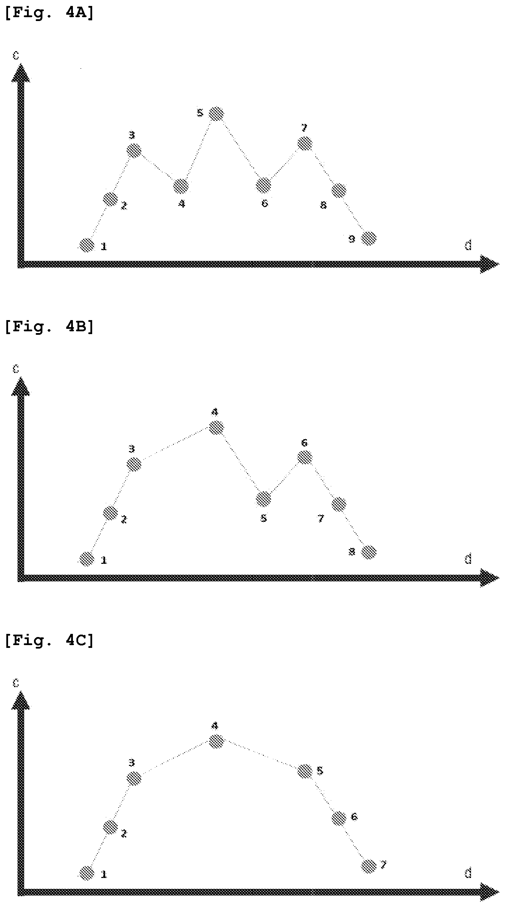

Ainsi, en reprenant l'exemple précédent, le système 100 selon l'invention va, au cours d'une première itération, analyser d'abord le premier couple (d₁, c₁) de la première suite, celui relatif au point 1, et il va établir que la première condition n'est pas remplie puisqu'il n'existe de pas de couple précédent. Ensuite, le système 100 selon l'invention va analyser le deuxième couple (d2, c2), celui qui correspond au point 2, et il va aussi établir que la première condition n'est pas remplie car il existe une variation positive entre la courbure relative au point 1 et celle relative au point 2. En progressant ainsi, le système 100 selon l'invention va établir pour la première fois que la première condition est remplie en analysant le couple relatif au point 4. En effet, il existe bien une variation négative entre la courbure relative au point 3 et celle relative au point 4 tandis qu'il existe une variation positive entre la courbure relative au point 5 et celle relative au point 6. Et, dans ce cas, puisque la valeur absolue de la variation entre la courbure relative au point 3 et celle relative au point 4 est non nulle, ce qui signifie que la deuxième condition est également remplie, et en considérant pour l'exemple que la variation de distance entre la distance relative au point 3 et la distance relative au point 4 est supérieure à la deuxième constante, ce qui signifie que la troisième condition est aussi remplie, le système 100 selon l'invention va alors procéder au retrait de la première suite du couple relatif au point 4. Ainsi, le système 100 selon l'invention va à ce stade aboutir à une suite qui ne comprend plus que neuf couples et qui, de manière visuelle, correspond au graphique de la figure 4A.

De manière similaire, au cours d'une deuxième itération basée à ce stade sur la suite qui correspond au graphique de la figure 4A qui ne comprend plus que neuf couples, le système 100 selon l'invention va établir que la première, la deuxième et la troisième condition sont remplies lorsqu'il va analyser le couple qui correspond au point 4. En effet, il existe bien une variation négative entre la courbure relative au point 3 et celle relative au point 4 tandis qu'il existe une variation positive entre la courbure relative au point 4 et celle relative au point 5. En outre la valeur absolue de la variation entre la courbure relative au point 3 et la courbure relative au point 4 est non nulle, ce qui signifie que la deuxième condition est également remplie, et on considère pour l'exemple que la variation entre la distance relative au point 3 et la distance relative au point 4 est supérieure à la deuxième constante, ce qui signifie que la troisième condition est aussi remplie. Le système 100 selon l'invention va donc procéder au retrait du couple relatif au point 4. Ainsi, le système 100 selon l'invention va à ce stade aboutir à une suite qui ne comprend plus que huit couples et qui, de manière visuelle, correspond au graphique de la figure 4B.

De même, au cours d'une troisième itération basée à ce stade sur la suite qui correspond au graphique de la figure 4B, le système 100 selon l'invention va établir que la première, la deuxième et la troisième condition sont remplies lorsqu'il va analyser le couple qui correspond au point 5. En effet, il existe bien une variation négative entre la courbure relative au point 4 et celle relative au point 5 tandis qu'il existe une variation positive entre la courbure relative au point 5 et celle relative au point 6. En outre la valeur absolue de la variation entre la courbure relative au point 4 et la courbure relative au point 5 est non nulle, ce qui signifie que la deuxième condition est également remplie, et on considère pour l'exemple que la variation entre la distance relative au point 4 et la distance d₅ relative au point 5 est supérieure à la deuxième constante, ce qui implique que la troisième condition est aussi remplie. Le système 100 selon l'invention va donc procéder au retrait du couple relatif au point 5. Ainsi, le système 100 selon l'invention va à ce stade aboutir à une suite qui ne comprend plus que sept couples et qui, de manière visuelle, correspond au graphique de la figure 4C.

A l'itération suivante basée à ce stade sur la suite qui correspond au graphique de la figure 4C, le système 100 selon l'invention va établir qu'aucun des sept couples restants ne satisfait la première, la deuxième et la troisième condition et il mettra alors fin au filtrage itératif pour passer à l'étape suivante du procédé selon l'invention.

Selon une troisième et ultime étape 203 du procédé selon l'invention, le système 100 selon l'invention gère la vitesse du véhicule dans le virage en utilisant la deuxième suite. Pour ce faire, le système 100 selon l'invention contrôle le fonctionnement de l'appareillage d'aide à la conduite 104 afin que la vitesse du véhicule dans le virage soit régulée en fonction de la deuxième suite. De cette manière, le système 100 selon l'invention va permettre d'éviter que des accélérations ou des décélérations inopportunes se produisent puisque la deuxième suite constituée tel que décrit ci-dessus détermine désormais un seul et unique virage.

Ainsi, grâce au procédé et au système selon l'invention décrits ci-dessus, une solution est fournie pour minimiser le risque qu'un appareillage d'aide à la conduite d'un véhicule automobile qui gère de manière autonome la vitesse du véhicule dans les virages produise des accélérations et des décélérations inopportunes. Par ce biais, l'invention améliore donc bel et bien le confort des véhicules automobiles ainsi que la sécurité de la conduite.

## Revendications

1. Procédé de gestion, par un système informatique (100), de la vitesse d'un véhicule automobile dans un virage, **caractérisé en ce que** le procédé comprend les étapes de :
i) acquérir (201) des données caractérisant des informations cartographiques consistant en une première suite composée de couples formés chacun d'une première valeur correspondant à la distance depuis l'entrée du virage, d'une deuxième valeur correspondant à la courbure du virage à cette distance et énumérés en rang croissant selon la distance depuis l'entrée du virage ;
ii) réaliser (202) un filtrage de la première suite de manière itérative afin d'obtenir une deuxième suite, ledit filtrage consistant à analyser à chaque itération un à un chacun des couples dans l'ordre croissant des rangs et à procéder au retrait d'un couple analysé si une première condition, une deuxième condition et une troisième condition sont remplies, la première condition étant remplie lorsqu'il est établi qu'il existe une variation négative entre la deuxième valeur du couple analysé et la deuxième valeur du couple précédent tandis qu'il existe une variation positive entre la deuxième valeur du couple analysé et la deuxième valeur du couple suivant ou une variation positive entre les deuxièmes valeurs de deux couples successifs de rang supérieur à celui du couple suivant, la deuxième condition étant remplie lorsqu'il est établi que la valeur absolue de la variation entre la deuxième valeur du couple analysé et la deuxième valeur du couple précédent est supérieure ou égale à une première constante préétablie et la troisième condition étant remplie lorsqu'il est établi que la première valeur du couple analysé et la première valeur du couple précédent est inférieure ou égale à une deuxième constante préétablie ; et
iii) gérer (203) la vitesse du véhicule dans le virage en utilisant la deuxième suite.

2. Procédé selon la revendication 1, **caractérisé en ce que** l'étape i) est réalisée en interagissant avec un appareillage de navigation (104) du véhicule qui communique au moyen d'un dispositif de communication par signaux radiofréquences (105) avec un serveur distant du véhicule afin de recevoir les informations cartographiques.

3. Système (100) pour gérer la vitesse d'un véhicule automobile dans un virage, **caractérisé en ce que** le système comprend au moins une unité de traitement d'informations (101), comprenant au moins un processeur, et un support de stockage de données (102) configurés pour mettre en œuvre un procédé selon l'une des revendications précédentes.

4. Programme d'ordinateur comprenant des instructions de code de programme pour l'exécution des étapes d'un procédé selon l'une des revendications 1 à 2 lorsque ledit programme est exécuté sur un ordinateur.

5. Support utilisable dans un ordinateur, **caractérisé en ce qu'**un programme selon la revendication 4 y est enregistré.

6. Véhicule automobile, **caractérisé en ce qu'**il comprend un système (100) selon la revendication 3.

## Patentansprüche

1. Verfahren zur Steuerung der Geschwindigkeit eines Kraftfahrzeugs in einer Kurve durch ein Computersystem (100), **dadurch gekennzeichnet, dass** das Verfahren die folgenden Schritte umfasst:
i) kartografische Daten zu erfassen (201), die aus einer ersten Folge von Paaren bestehen, die jeweils aus einem ersten Wert bestehen, der der Entfernung vom Einfahren der Kurve entspricht, einem zweiten Wert, der der Kurvenkrümmung bei dieser Entfernung entspricht, und die in einer nach der Entfernung vom Einfahren der Kurve steigenden Rangfolge aufgeführt sind;
ii) Durchführung (202) einer iterativen Filterung der ersten Folge, um eine zweite Folge zu erhalten, wobei die Filterung darin besteht, bei jeder Iteration eines jeden der Drehmomente in der aufsteigenden Reihenfolge der Reihen zu analysieren und ein analysiertes Drehmoment zu entfernen, wenn eine erste Bedingung, eine zweite Bedingung und eine dritte Bedingung erfüllt sind, wobei die erste Bedingung erfüllt ist, wenn festgestellt wird, dass eine negative Abweichung zwischen dem zweiten Wert des analysierten Drehmoments und dem zweiten Wert des vorhergehenden Drehmoments vorliegt, während eine positive Abweichung zwischen dem zweiten Wert des analysierten Drehmoments und dem zweiten Wert des nachfolgenden Drehmoments oder eine positive Abweichung zwischen den zweiten Werten zweier aufeinander folgender Drehmomente von Rang vorliegt größer als das nächste Drehmoment ist, wobei die zweite Bedingung erfüllt ist, wenn festgestellt wird, dass der Absolutwert der Änderung zwischen dem zweiten Wert des analysierten Drehmoments und dem zweiten Wert des vorhergehenden Drehmoments größer oder gleich einer ersten vorbestimmten Konstanten ist, und die dritte Bedingung erfüllt ist, wenn festgestellt wird, dass der erste Wert des analysierten Drehmoments und der erste Wert des vorhergehenden Drehmoments kleiner oder gleich einer zweiten vorbestimmten Konstanten sind, und
iii) Steuerung (203) der Geschwindigkeit des Fahrzeugs in der Kurve mithilfe der zweiten Folge.

2. Verfahren nach Anspruch 1, **dadurch gekennzeichnet, dass** Schritt i) durch Interaktion mit einem Navigationsgerät (104) des Fahrzeugs durchgeführt wird, das über eine Funkfrequenzsignal-Kommunikationsvorrichtung (105) mit einem Server kommuniziert, der von dem Fahrzeug entfernt ist, um die Karteninformationen zu empfangen.

3. System (100) zur Steuerung der Geschwindigkeit eines Kraftfahrzeugs in einer Kurve, **dadurch gekennzeichnet, dass** das System mindestens eine Informationsverarbeitungseinheit (101), die mindestens einen Prozessor umfasst, und ein Datenspeichermedium (102) umfasst, das so konfiguriert ist, dass es ein Verfahren nach einem der vorhergehenden Ansprüche ausführt.

4. Computerprogramm mit Programmcodeanweisungen zum Ausführen der Schritte eines Verfahrens nach einem der Ansprüche 1 bis 2, wenn das Programm auf einem Computer ausgeführt wird.

5. Computerverwendbares Medium, **dadurch gekennzeichnet, dass** ein Programm nach Anspruch 4 darin aufgezeichnet ist.

6. Kraftfahrzeug, **dadurch gekennzeichnet, dass** es ein System (100) nach Anspruch 3 umfasst.

## Claims

1. A method of managing, by a computer system (100), the speed of a motor vehicle in a bend, **characterised in that** the method comprises the steps of:
i) acquiring (201) data characterising mapping information consisting of a first compound series of pairs each comprising a first value corresponding to the distance from the entry of the turn, a second value corresponding to the curvature of the turn at this distance and listed in ascending order according to the distance from the entry of the turn;
ii) performing (202) a screening of the first series iteratively in order to obtain a second series, said screening consisting in analysing each of the pairs in ascending order of the rows at each iteration one by one and in withdrawing an analysed torque if a first condition, a second condition and a third condition are satisfied, the first condition being satisfied when it is established that there is a negative variation between the second value of the analysed torque and the second value of the previous torque while there is a positive variation between the second value of the analysed torque and the second value of the next torque or a positive variation between the second values of two successive pairs of rank higher than the next torque, the second condition being met when it is established that the absolute value of the variation between the second value of the analysed torque and the second value of the previous torque is greater than or equal to a first pre-established constant and the third condition being met when it is established that the first value of the analysed torque and the first value of the previous torque is less than or equal to a second pre-established constant; and
iii) managing (203) the speed of the vehicle in the turn using the second series.

2. Method according to claim 1, wherein step i) is realised by interacting with a navigation apparatus (104) of the vehicle which communicates by means of a radio frequency signal communication device (105) with a server remote from the vehicle in order to receive the cartographic information.

3. System (100) for managing the speed of a motor vehicle in a bend, **characterised in that** the system comprises at least one information processing unit (101), comprising at least one processor, and a data storage medium (102) configured to implement a method according to one of the previous claims.

4. A computer plan comprising plan code instructions for executing the steps of a method according to any one of claims 1 to 2 when said plan is executed on a computer.

5. A medium usable in a computer, wherein a plan according to claim 4 is recorded therein.

6. Motor vehicle, **characterised in that** it comprises a system (100) according to claim 3.
